# FASCICULE DE BREVET EUROPEEN

(11) **EP 3 309 490 B1**
(45) Date de publication et mention de la délivrance du brevet: **08.05.2019**
(21) Numéro de dépôt: 17020424.2
(22) Date de dépôt: 15.09.2017
(51) Int. Cl.: F28C 1/02, F28C 1/10

(54) **TOUR DE REFROIDISSEMENT**
KÜHLTURM
COOLING TOWER

(30) Priorité: 13.10.2016 BE 201600155
(43) Date de publication de la demande: 18.04.2018
(73) Titulaire: Hamon Thermal Europe S.A., 1435 Mont-St-Guibert (BE)
(72) Inventeur: Ganzitti, Vincent, B-1435 Mont-ST-Guibert (BE)
(74) Mandataire: Powis de Tenbossche, Roland

(56) Documents cités:
- DE-A1- 3 327 932
- DE-C1- 3 121 467
- JP-A- S51 101 250
- JP-A- S51 147 040
- JP-A- S52 103 050
- JP-U- S5 736 468
- JP-U- S52 132 441

## Description

La présente invention a pour objet une tour de réfrigération pour refroidir un fluide aqueux au moyen d'air atmosphérique par contact direct, avantageusement à contre courant, dudit fluide aqueux avec l'air atmosphérique dans une enceinte, cette tour comprenant :
a) une enceinte;
b) une amenée d'air dans ladite enceinte;
c) une évacuation d'air hors de ladite enceinte;
d) un échangeur de chaleur situé dans l'enceinte entre l'amenée d'air et l'évacuation d'air assurant un contact direct entre le fluide aqueux à refroidir et de l'-air circulant dans l'échangeur;
e) un dispositif de pulvérisation du fluide aqueux à refroidir sur l'échangeur ou au moins une partie de celui-ci; et
f) un séparateur de goutte situé entre le dispositif de pulvérisation et l'évacuation,
ladite tour étant en outre associée à un moyen pour absorber au moins partiellement le bruit généré dans l'enceinte. JP S52 132441 divulgue une tour de refroidissement selon le préambule de la revendication 1.

Le problème du bruit des tours de réfrigération est bien connu. On a ainsi proposé d'utiliser des parois ou des enveloppes contre le bruit entourant l'échangeur ou des parois pour absorber le bruit générer par la chute d'eau. (voir par exemple US4130613, WO02/14768).

Ces systèmes permettent une certaine atténuation du bruit, mais ne permettent pas d'atténuer correctement le bruit généré dans l'enceinte même de la tour.

La présente invention a pour objet une tour de refroidissement du type décrit dans le premier paragraphe du présent mémoire qui permet de réduire le bruit générer dans la partie haute de la tour de réfrigération.

La tour selon l'invention se caractérise essentiellement en ce qu'elle comprend au moins un moyen pour absorber au moins partiellement le bruit généré dans l'enceinte formé par un élément absorbant du bruit ou une série d'éléments absorbant du bruit comportant au moins une partie réalisée en mousse présentant une hauteur moyenne d'au moins 5cm, avantageusement de 25cm à 100cm, une épaisseur moyenne d'au moins 2cm, avantageusement de 10cm à 30 cm et une densité inférieure à 100kg/m³, avantageusement inférieure à 50kg/m³, en particulier de 15 à 30 kg/m³, l'élément absorbant ou ladite série d'éléments absorbants étant disposés sur le séparateur de goutte ou au-dessus de celui-ci, éventuellement avec interposition d'un support permettant le passage d'air provenant du séparateur de goutte, l'élément absorbant ou ladite série d'éléments absorbants étant agencés ou adaptés pour définir un réseau de passages distincts ouverts pour l'air sortant du séparateur de goutte vers l'évacuation, lesdits passages présentant chacun une section ouverte comprise entre 200cm² et 2000cm², avantageusement entre 400cm² et 900cm², plus particulièrement de 500cm² à 700cm², et une hauteur d'au moins 5cm à 100cm, en particulier de 10 à 50cm, par exemple de 20 à 30cm, et en ce que la tour comporte un moyen limitant les mouvements relatifs dudit élément absorbant ou desdits éléments absorbants formant ledit réseau par rapport au séparateur de goutte dans une direction perpendiculaire au plan de la surface supérieure du séparateur de goutte, avantageusement évitant sensiblement tous mouvements relatifs dudit élément absorbant ou desdits éléments absorbants formant ledit réseau de passages par rapport au séparateur de goutte.

La tour présente avantageusement une ou plusieurs, avantageusement une combinaison des caractéristiques suivantes :
* l'élément absorbant ou la série d'éléments absorbants sont disposés au moins partiellement directement sur une face du séparateur de goutte, en particulier sur la face supérieure du séparateur de goutte.
* les éléments absorbants ont une forme allongée et au moins une série desdits éléments absorbants sont disposés sensiblement parallèles entre eux,
* l'élément absorbant ou les éléments absorbants sont attachés en des endroits distincts au séparateur de goutte au moyen d'éléments de fixation.
* les éléments absorbants sont adaptés pour former ensemble une ou des alvéoles creuses définissant chacune un passage ouvert ou définissent chacun une ou des alvéoles creuses définissant chacune un passage ouvert.
* la tour comporte des éléments absorbants présentant des moyens adaptés pour coopérer les uns avec d'autres pour former au moins partiellement un réseau d'alvéoles formant chacune un passage ouvert distinct pour de l'air sortant du séparateur de goutte (de façon avantageuse sensiblement uniquement un tel réseau d'alvéoles formant chacune un passage ouvert distinct pour de l'air sortant du séparateur de goutte), lesdits moyens étant adaptés pour maintenir la position relative d'éléments absorbants par rapport à d'autres. Les éléments sont par exemple des éléments absorbants distincts que l'on peut placer les uns par rapport aux autres pour former des alvéoles ouvertes distinctes. Les éléments absorbants sont par exemple des éléments absorbants allongés. Avantageusement, les éléments absorbants sont des éléments longitudinaux présentant une série d'évidements adaptés pour assurer l'emboîtement d'une partie d'un premier élément absorbant dans l'évidement d'un deuxième élément absorbant.
   De préférence, les éléments absorbants sont adaptés pour former un réseau d'alvéoles distinctes de section sensiblement triangulaire ou carrée ou rectangulaire ou parallélogramme de section ouverte comprise entre 200cm² et 2000cm², avantageusement entre 400cm² et 900cm², plus particulièrement de 500cm² à 700cm².
* Chaque alvéole ouverte distincte définit une chambre ouverte s'étendant entre une ouverture inférieure et une ouverture supérieure, chacune de une section comprise entre 200 et 2000cm² (en particulier de 400 à 900cm²), lesdites ouvertures inférieure et supérieure étant distantes l'une de l'autre d'une distance de 5 à 100cm, en particulier de 10 à 50 cm, par exemple de 20 à 30cm.
* le réseau d'alvéoles ouvertes présente une section obturée par les éléments absorbants et une section ouverte définie par les chambres ouvertes définies par les alvéoles, le rapport section ouverte / section obturée du réseau d'alvéoles ouvertes étant compris entre 2 et 5, avantageusement entre 2.0 et 4,. Le réseau d'alvéoles ne forme ainsi qu'un faible frein à l'écoulement de l'air sortant du séparateur de goutte, par rapport au frein généré dans le séparateur de goutte. De plus, le réseau ne génère qu'un frein très local au niveau du séparateur de goutte pour l'écoulement de l'air.
* l'élément absorbant ou la série d'éléments absorbants est/sont réalisés en mousse à cellules, avantageusement ouvertes, de taille moyenne en nombre comprise entre 500 et 2000 µm, avantageusement entre 700 et 1200 µm. L'élément absorbant du bruit en mousse ou les éléments absorbant du bruit en mousse est/sont avantageusement à cellules ouvertes ou semi-ouvertes, en particulier ouverte. La mousse est en particulier réalisée en une matière résistant à l'eau, et plus spécifiquement en une matière hydrophobe. La mousse est avantageusement compressible ou légèrement élastique. La mousse est de préférence une mousse résistant au feu et à des températures de -50°C à plus de 200°C. En particulier, en cas de feu, la mousse présente une haute résistance à s'enflammer et à former des gouttes chaudes en cas d'incendie dans la tour. L'élément absorbant en mousse peut se présenter sous la forme d'un tapis ajouré apte à être enroulé pour son transport, mais apte à pouvoir reprendre une forme plate après déroulement.
* l'élément absorbant ou la série d'éléments absorbants présente/présentent une épaisseur ou largeur comprise entre 2 et 30cm, avantageusement entre 10 et 30cm, en particulier de 15 à 25 cm.
* l'élément absorbant ou les éléments absorbants est/sont un/des éléments en mousse dont une ou des faces sont munie(s) d'un revêtement imperméable à l'eau, mais avantageusement perméable aux gaz et à la vapeur, d'une épaisseur de moins de 500µm.
* le réseau formé par l'élément absorbant ou ladite série d'éléments absorbants est placé sur le séparateur de goutte, une partie prépondérante de la face inférieure de l'élément absorbant ou de chaque élément absorbant formant ledit réseau prenant appui sur le séparateur de goutte.
* le réseau est fixé audit séparateur par des liens en des zones où des éléments se croisent ou en des noeuds dudit réseau. Par un noeud du réseau, on entend en particulier une zone située entre trois, quatre, cinq ou six alvéoles adjacentes.
* le réseau n'est fixé audit séparateur de goutte sensiblement uniquement en des zones où les éléments se croisent.
* le réseau formé par ledit élément absorbant ou la série d'éléments absorbants, avantageusement par la série d'éléments absorbants, présente une première face tournée vers le séparateur de goutte et une deuxième face opposée à ladite première face, ladite première et/ou deuxième face étant accessoirement, mais avantageusement, associée à un film polyuréthanne ou polyétheramide d'épaisseur comprise entre 10 et 200µm, avantageusement entre 20 et 50µm, ledit film étant résistant à l'eau. La présence de ce film forme une sorte de peau empêchant à de l'eau de pénétrer dans la mousse par la face inférieure et/ou supérieure des éléments. On a de plus remarqué que la présence d'un tel film sur une ou des faces extérieures des éléments, par exemple desdites première et deuxième faces ou partiellement sur les faces latérales des éléments (faces tournées vers une alvéole) avait un impact positif quant à l'absorption du bruit, par exemple pour le bruit de fréquence comprise de 900Hz à 7000Hz.
* l'élément absorbant ou la série d'éléments absorbants forme/forment un réseau autoportant prenant appui sur le séparateur de goutte sans interposition d'un cadre ou d'un grillage métallique, par exemple en aluminium.
* une combinaison de telles caractéristiques.

L'invention a également pour objet l'utilisation d'une tour suivant l'invention, pour refroidir de manière efficace et avec atténuation de bruit, un fluide aqueux au moyen d'air par contact direct, avantageusement à contre courant, dudit fluide aqueux avec l'air dans l'enceinte de ladite tour de refroidissement.

Il est clair que des tours de refroidissement existantes peuvent facilement être converties en une tour selon l'invention en y incorporant un réseau de mousse absorbant du bruit tel que décrit pour la tour selon l'invention. L'invention a donc encore pour objet un procédé pour améliorer les problèmes de bruit de tours existantes.

L'invention a donc également pour objet un procédé pour réduire ou solutionner au moins partiellement des problèmes de bruits d'une tour de refroidissement pour refroidir un fluide aqueux à refroidir au moyen d'air atmosphérique par contact direct, avantageusement à contre courant, dudit fluide aqueux à refroidir avec l'air atmosphérique dans une enceinte, cette tour comprenant :
* une enceinte;
* une amenée d'air dans ladite enceinte;
* une évacuation d'air hors de ladite enceinte;
* un échangeur de chaleur situé dans l'enceinte entre l'amenée d'air et l'évacuation d'air assurant un contact direct entre le fluide aqueux à refroidir et de l'air circulant dans l'échangeur;
* un dispositif de pulvérisation du fluide aqueux à refroidir sur au moins une partie de l'échangeur; et
* un séparateur de goutte situé entre le dispositif de pulvérisation et l'évacuation, dans lequel on place sur le séparateur de goutte ou au-dessus de celui-ci, éventuellement avec interposition d'un support permettant le passage d'air provenant du séparateur de goutte, un élément absorbant du bruit ou une série d'éléments absorbants du bruit comportant au moins une partie réalisée en mousse présentant une hauteur moyenne d'au moins 5cm, avantageusement de 25cm à 100cm, une épaisseur moyenne d'au moins 2cm, avantageusement de 10cm à 30cm, et une densité inférieure à 100kg/m³, avantageusement inférieure à 50kg/m³, en particulier de 15 à 30 kg/m³, ledit élément absorbant ou ladite série d'éléments absorbants étant agencés ou adaptés pour définir un réseau de passages distincts ouverts pour l'air sortant du séparateur de goutte vers l'évacuation, lesdits passages présentant chacun une section ouverte comprise entre 200cm² et 2000cm², avantageusement entre 400 et 900cm², et une hauteur de 5cm à 100cm, en particulier de 10 à 50cm,
et dans lequel on utilise un moyen de maintien pour limiter les mouvements relatifs dudit élément absorbant ou desdits éléments absorbants formant ledit réseau par rapport au séparateur de goutte dans une direction perpendiculaire au plan de la surface supérieure du séparateur de goutte, avantageusement évitant sensiblement tous mouvements relatifs dudit élément absorbant ou desdits éléments absorbants formant ledit réseau de passages par rapport au séparateur de goutte.

Le procédé selon l'invention utilise un ou des moyens décrits dans une tour de refroidissement selon l'invention, comportant une ou plusieurs des caractéristiques décrites ci-avant pour la tour de refroidissement selon l'invention ou des formes de réalisation de celle-ci.

Le procédé selon l'invention permet d'ajuster facilement et rapidement le bruit généré dans une enceinte d'une tour existante, dont les moyens anti-bruit ne sont plus optimaux ou dont les moyens anti-bruit ne permettent plus de répondre à une norme, ceci sans devoir modifier la structure même de la tour de refroidissement.

Le procédé selon l'invention présente avantageusement une ou plusieurs des caractéristiques suivantes, en particulier une combinaison de telles caractéristiques:
- l'élément absorbant du bruit ou les éléments absorbants du bruit sont disposés au moins partiellement directement sur une face du séparateur de goutte, en particulier sur la face supérieure du séparateur de goutte.
- les éléments absorbants ont une forme allongée et au moins une série desdits éléments absorbants sont disposés sensiblement parallèles entre eux,
- l'élément absorbant du bruit ou les éléments absorbants du bruit se présente sous forme d'un tapis ajouré ou de tapis ajourés apte(s) à être enroulé(s), ledit ou lesdits éléments absorbants étant déroulés sur le séparateur de goutte.
- l'élément absorbant ou les éléments absorbants sont attachés en des endroits distincts au séparateur de goutte au moyen d'éléments de fixation.
- les éléments absorbants sont adaptés pour former ensemble une ou des alvéoles creuses définissant chacune un passage ouvert ou définissent chacun une ou des alvéoles creuses définissant chacune un passage ouvert.
- on utilise des éléments absorbants présentant des moyens adaptés pour coopérer les uns avec d'autres pour former au moins partiellement un réseau d'alvéoles formant chacune un passage ouvert distinct pour de l'air sortant du séparateur de goutte (de façon avantageuse sensiblement uniquement un tel réseau d'alvéoles), lesdits moyens étant adaptés pour maintenir la position relative d'éléments absorbants par rapport à d'autres, lesdits éléments absorbants étant avantageusement des éléments longitudinaux présentant une série d'évidements adaptés pour assurer un emboîtement d'une partie d'un élément absorbant dans l'évidement d'un autre élément absorbant, et étant de préférence adaptés pour former un réseau d'alvéoles distinctes de section triangulaire ou carrée ou rectangulaire ou parallélogramme de section ouverte comprise entre 200cm² et 2000cm², avantageusement entre 400cm² et 900cm².
- on utilise un élément absorbant ou des éléments absorbants au moins partiellement en mousse pour former un réseau d'alvéoles définissant chacune une chambre ouverte s'étendant entre une ouverture inférieure et une ouverture supérieure, chacune de section comprise entre 200 et 2000cm², lesdites ouvertures inférieure et supérieure étant distante l'une de l'autre de 5 à 100cm, en particulier de 10 à 50 cm.
- on utilise et place un élément absorbant ou des éléments absorbants pour former un réseau d'alvéoles ouvertes présentant une section obturée par l'élément absorbant ou les éléments absorbants et une section ouverte définie par les chambres ouvertes définies par les alvéoles, le rapport section ouverte / section obturée du réseau d'alvéoles ouvertes étant compris entre 2 et 5, avantageusement entre 2 et 4.
- on utilise un élément absorbant ou une série d'éléments absorbants réalisés en mousse à cellules, avantageusement ouvertes, de taille moyenne en nombre comprise entre 500 et 2000 µm, avantageusement entre 700 et 1200 µm. (pour la détermination de la taille des cellules, on a considéré que les cellules définissaient chacune une chambre sensiblement sphérique, la taille correspondant alors au diamètre de cette chambre. La taille d'une cellule correspond donc à la racine cubique de (6 fois le volume divisé par 3,14))
- les éléments absorbants sont des éléments en mousse dont une ou des faces sont munie(s) d'un revêtement imperméable à l'eau, mais avantageusement perméable aux gaz et à la vapeur, d'une épaisseur de moins de 500µm.
- le réseau formé par les éléments absorbants est placé sur le séparateur de goutte, une partie prépondérante de la face inférieure de chaque élément absorbant formant ledit réseau prenant appui sur le séparateur de goutte;
- on lie ou fixe le réseau (20) audit séparateur de goutte (13) par des liens (23) en des zones du réseau où des éléments absorbants (21A, 21B) se croisent ou où l'élément absorbant forme des noeuds, l'élément absorbant ou la série d'éléments absorbants n'étant avantageusement pas reliés par des liens (23) audit séparateur de goutte (13) dans les zones du réseau où les éléments absorbants (21A, 21B) ne se croisent pas ou dans des zones du réseau autres que les noeuds.

Des particularités et détails d'une forme de réalisation préférée, donnée à titre d'exemple uniquement, ressortiront de la description suivante dans laquelle il est fait référence aux dessins ci-annexés.

Dans ces dessins,
- la figure 1 est une vue schématique d'une tour de refroidissement selon l'invention;
- la figure 2 est une vue en coupe d'une partie de la tour de la figure 1;
- la figure 3 est une vue en perspective partielle d'éléments pour réaliser le réseau alvéolé de mousse au-dessus du séparateur de goutte;

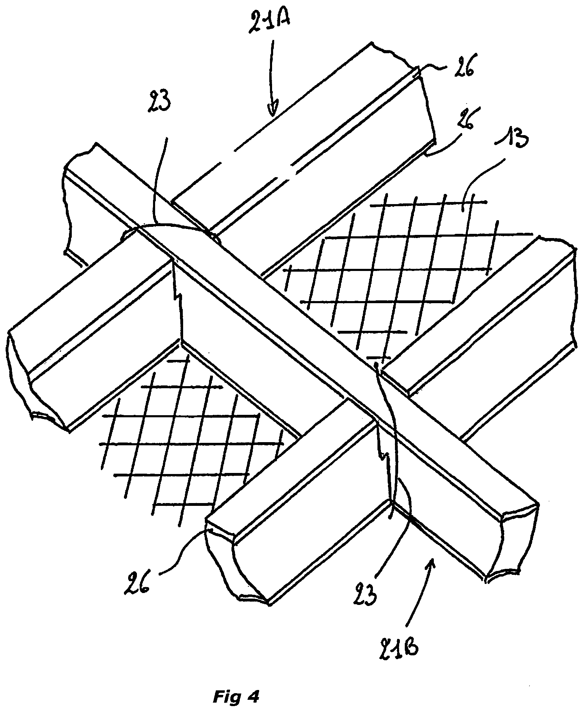

- la figure 4 est une vue en perspective d'une zone de croisement de deux éléments;
- la figure 5 est une vue de haut d'un réseau d'éléments absorbants disposés pour définir des alvéoles de section sensiblement triangulaire;
- la figure 6 est une vue de haut d'un réseau d'éléments absorbants disposés parallèles entre eux;
- la figure 7 est une vue schématique en soupe d'une autre tour selon l'invention avec tirage naturel; et
- la figure 8 est une vue schématique en coupe d'encore une autre tour selon l'invention avec tirage forcé.

Les figures ci-jointes sont représentatives de formes de réalisation selon l'invention, qui ne sont données ici qu'à titre d'exemples uniquement.

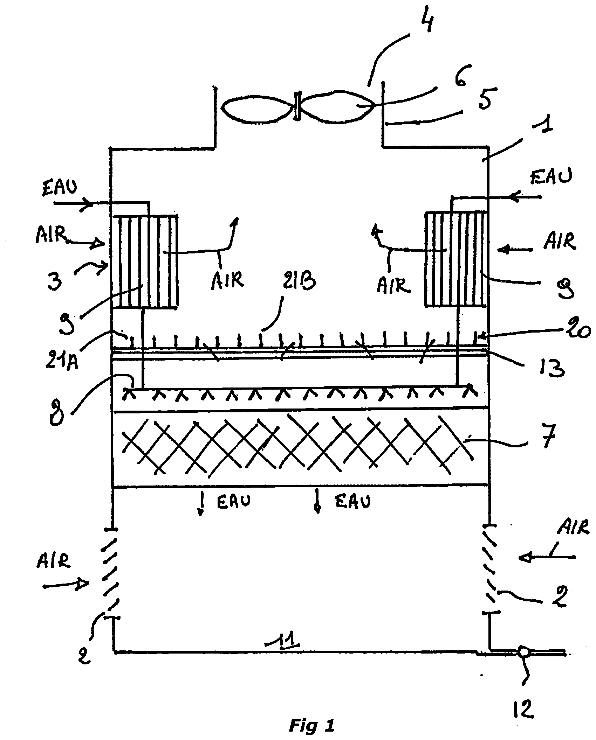

La figure 1 est une vue schématique d'une tour de refroidissement selon l'invention, cette tour étant adaptée pour refroidir un fluide aqueux au moyen d'air par contact direct, avantageusement à contre courant, dudit fluide aqueux avec l'air dans une enceinte E avantageusement isolée le long de ses parois extérieures. Cette tour comprenant :
- une enceinte 1;
- une première amenée d'air 2 et avantageusement une deuxième amenée d'air 3 dans ladite enceinte;
- une évacuation ou sortie 4 d'air hors de ladite enceinte, cette sortie 4 étant situé à l'extrémité d'un conduit circulaire 5 porté par l'enceinte 1;
- au moins un moyen (ventilateur 6) pour assurer un courant d'air entre les amenées 2,3 et l'évacuation 4, le ventilateur 6 étant situé dans le conduit 5 et étant adapté pour assurer une extraction d'air situé dans l'enceinte 1 (le tirage est donc du type « induit » dans l'enceinte 1);
- un échangeur de chaleur 7 (sous forme de "packing" ou garnissage) situé dans l'enceinte 1 entre l'amenée d'air inférieure 2 et l'évacuation d'air 4, ledit échangeur 7 assurant un contact direct entre le fluide aqueux à refroidir et de l'air atmosphérique, le liquide aqueux refroidi sortant par le bas du garnissage tombant dans le fond de l'enceinte 1 ou dans un bac collecteur 11, liquide qui est ensuite pompé (pompe 12) pour utilisation ultérieure, éventuellement après une étape de traitement (par exemple filtration), ledit échangeur définissant une série de canaux verticaux dans lesquels s'écoule vers le bas le liquide à refroidir, tandis que l'air circule vers le haut dans lesdits canaux verticaux;
- un dispositif de pulvérisation 8 du fluide aqueux à refroidir sur au moins une partie de l'échangeur 7, en particulier sur la face supérieure de l'échangeur de chaleur 7;
- avantageusement un échangeur de chaleur 9 (sans contact direct milieu aqueux à refroidir - air) situé au niveau de l'amenée ou entrée 3, cet échangeur 9 servant à refroidir le liquide avant qu'il ne soit pulvérisé sur le garnissage 7, et à créer un courant d'air sec et réchauffé entrant dans l'enceinte via l'entrée 3 (cette amenée d'air permet de réduire le panache de l'air sortant de la tour), et
- un séparateur de goutte 13 situé entre le dispositif de pulvérisation 8 et l'évacuation ou sortie 4 associée au ventilateur 6, ce séparateur de goutte 13 servant à éliminer des particules ou gouttelettes d'eau emportées par le courant d'air induit dans l'enceinte 1,
- un moyen 20 pour absorber au moins partiellement le bruit généré dans l'enceinte,
   ledit moyen pour absorber au moins partiellement le bruit généré dans l'enceinte comprenant une série d'éléments absorbants 21A, 21B (qui peuvent être identiques ou différents) comportant au moins une partie réalisée en mousse présentant une hauteur d'au moins 5cm, une épaisseur d'au moins 2cm et une densité inférieure à 50kg/m³, par exemple de 20 à 30kg/m³, ladite série d'éléments absorbants 21A, 21B étant disposés directement sur le séparateur de goutte 13, ladite série d'éléments absorbants étant agencés ou adaptés pour définir un réseau alvéolé présentant une série d'alvéoles 22 définissant des passages ouverts pour l'air sortant du séparateur de goutte 13 vers l'évacuation 4, lesdits passages des alvéoles 22 présentant chacun une section ouverte par exemple d'au moins 400cm² et une hauteur d'au moins 25cm,
- un moyen 23 (tel qu'un lien en plastic) limitant les mouvements relatifs (vertical et horizontal) dudit réseau 20 par rapport au séparateur de goutte 13 dans une direction verticale (perpendiculaire au plan de la surface supérieure du séparateur de goutte 13), lesdits moyens 23 empêchant de préférence tous mouvements relatifs entre le réseau et le séparateur de goutte 13 dans les zones de liaison.

Les éléments 21A, 21B sont des éléments en mousse longitudinaux de section transversale triangulaire ou rectangulaire ou parallélogramme ou trapézoïdale. La section transversale peut varier avec une base entre 5 et 20cm, par exemple 10cm, et une hauteur de 5 à 50cm, par exemple de 10 à 30cm. Les éléments présentent à distance régulière des encoches 25 s'étendant sur une distance égale à la moitié de la hauteur des éléments H et présentant une largeur 1 correspondant à l'épaisseur E des éléments. Les éléments 21A, 21B peuvent ainsi être reliés les uns aux autres par emboîtement et former un réseau alvéolé. Cet emboîtement assure un maintien en position des éléments les uns par rapport aux autres.
Les éléments absorbants 21A, 21B sont autoportés par le séparateur de goutte 13 et forment un dispositif apte à changer ou contrôler le profil d'air s'écoulant à travers le séparateur de goutte et/ou entre le séparateur de goutte et l'évacuation 4, pour au moins des débits d'air s'écoulant au travers du corps d'échange donnés.

En adaptant la position des encoches 25, il est alors possible de former un réseau avec des alvéoles rectangulaires ou parallélogrammes ou carrées, par exemple de largeur variant de 10cm à 50cm (avantageusement de 20cm à 40cm, par exemple d'environ 40cm) et de longueur variant de 20cm à 50cm (avantageusement de 30 à 45cm, par exemple d'environ 40cm). La section des alvéoles qui peut être constante ou non peut ainsi varier de 200cm² à 2000cm², mais est de préférence de 400cm² à 900cm², tel que de 500 à 800cm².

Le réseau d'alvéoles présentent une section obturée par les éléments et une section ouverte définie par les alvéoles, le rapport section ouverte / section obturée étant compris entre 2 et 5, avantageusement entre 2 et 4 ou encore mieux entre 2,5 et 3,5.

Les éléments sont réalisés en mousse à cellules (en particulier ouvertes) de taille moyenne en nombre comprise entre 500 et 2000 µm, avantageusement entre 700 et 1200 µm. La mousse est choisie pour pouvoir résister à l'eau, à l'humidité et au feu. Une telle mousse est par exemple une mousse de polyuréthanne et/ou polyester présentant une densité de 15 à 30kg/m³ (par exemple 15, 20, 25 ou 30 kg/m³), une résistance à la compression à 40% d'écrasement de 2 à 10kPa, par exemple 2, 3, 4, 5, 6, 7, 8, 9 et 10 3kPa (résistance mesurée selon la norme ISO 3388/1), une résistance à la traction de plus de 50kPa, par exemple 75kPa, 100kPa, 150kPa, 200kPa, 250kPa, 300kPa.
Les éléments en mousse ont été munis sur les faces supérieure et inférieure d'un revêtement 26 pour former un film résistant à l'eau, film imperméable à l'eau liquide. Ce film 26 a une épaisseur de l'ordre de 20 à 50µm. et forme un bon appui pour les éléments en mousse 21A, 21B sur le séparateur de goutte, ainsi qu'une bonne protection pour éviter un déchirement des éléments absorbants 21A, 21B dans les zones de liaison avec les liens 23. Les liens 23 génèrent avantageusement une légère compression des éléments absorbants 21A, 21B sur le séparateur de goutte 13, au moins au niveau des liens 23. Eventuellement, les faces latérales sont également partiellement munies de ce film au voisinage de leurs faces supérieure et inférieure. Ce film assure une protection des faces inférieure et supérieure, mais également des coins. De plus, on a remarqué que la présence de ce film 26 permettait d'améliorer l'absorption des bruits dans une large plage de fréquence, par exemple de 900Hz à 5000Hz. Ce film 26 est avantageusement un film polyuréthanne et/ou polyéther ou polyester (par exemple polyétheramide). Ce film forme une couche continue et plane.

Le réseau d'alvéoles 20 prend directement appui sur le séparateur de goutte 13. Vu son faible poids, il n'est pas nécessaire de prévoir des moyens de supports supplémentaires. Le réseau d'éléments absorbants 13 est fixé uniquement audit séparateur par des attaches rapides flexibles ou non 23 en des zones distinctes, avantageusement en des zones où des éléments se croisent, de sorte qu'un même lien permet une fixation de deux éléments absorbants en une zone du séparateur de goutte 13. Ces attaches mettent ces zones de croisement sous légère compression par rapport aux autres zones des éléments en mousse ou sous compression plus importante par rapport aux parties d'éléments absorbants situées entre deux liens 23. Cette mise sous compression permet d'assurer un certain espace du réseau au niveau des zones de croisement des éléments.

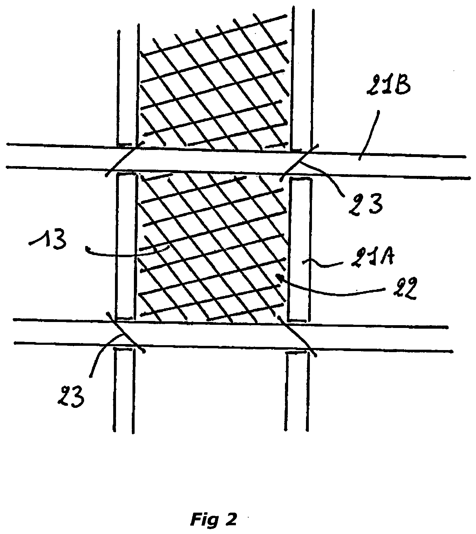

La figure 2 est une vue de dessus d'un réseau d'alvéoles de section rectangulaires 22 obtenues par croisement d'éléments absorbants 21A, 21B, les liens 23 assurant une mise sous compression des éléments absorbants 21A, 21B aux zones de liaison du réseau avec le séparateur de goutte. Les zones des éléments absorbants entre deux liens 23 sont pas comprimées ou moins comprimées que par rapport aux zones comprimées au niveau des liens 23.

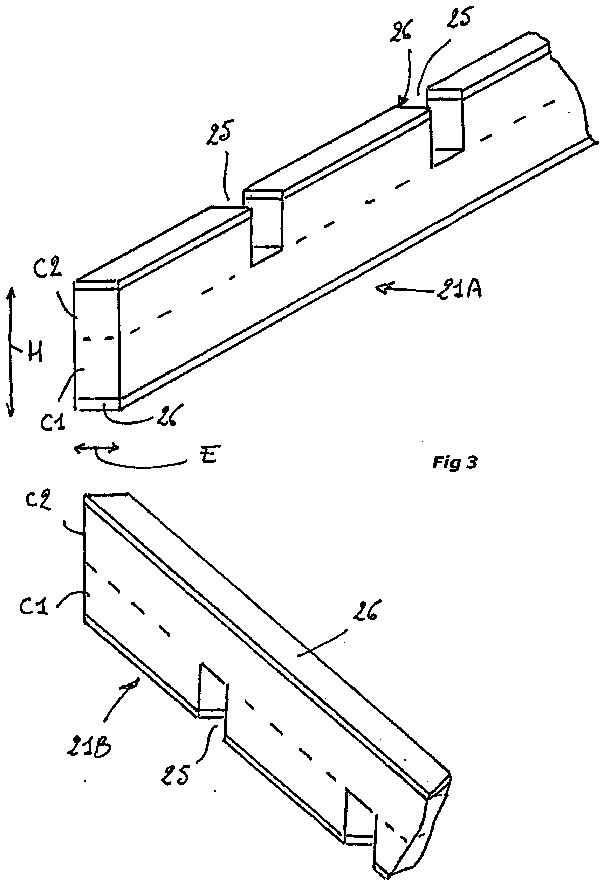

Comme montré en traits interrompus à la figure 3, les éléments absorbants 21A, 21B en mousse peuvent être constitués de deux types différents de mousse, en particulier de densité différente. Par exemple une couche inférieure Cl de plus grande densité (par exemple de 70 à 100kg/m³) par rapport à la couche supérieure C2 tournée vers l'évacuation 4, (densité par exemple de moins de 50kg/m³), ce qui permet une meilleure atténuation de bruits.

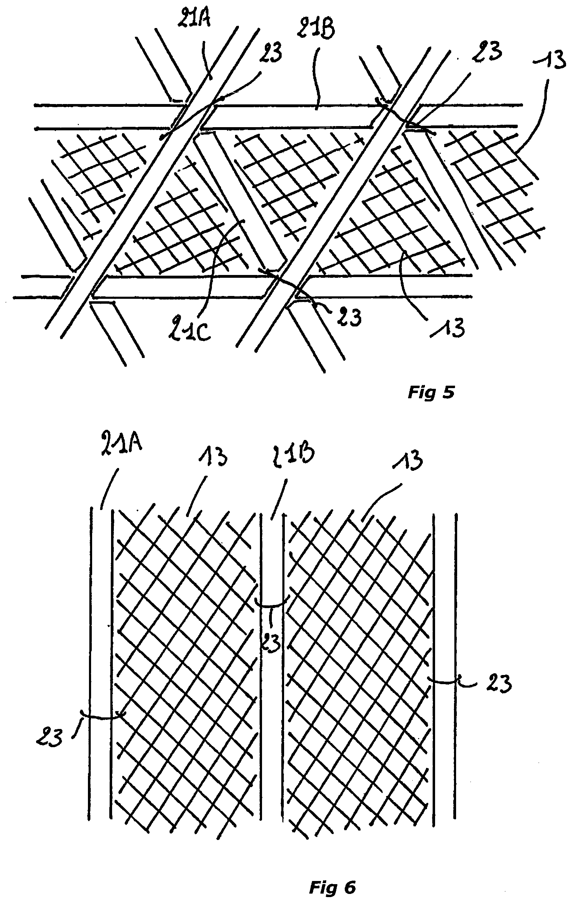

La figure 5 est une vue de haut d'une un réseau d'éléments absorbants disposés pour définir des alvéoles de section sensiblement triangulaire obtenu par croisement d'éléments absorbants 21A, 21B,21C, présentant des creux permettant des emboîtements des éléments entre eux.

La figure 6 est une vue de haut d'un réseau d'éléments absorbants disposés parallèles entre eux.

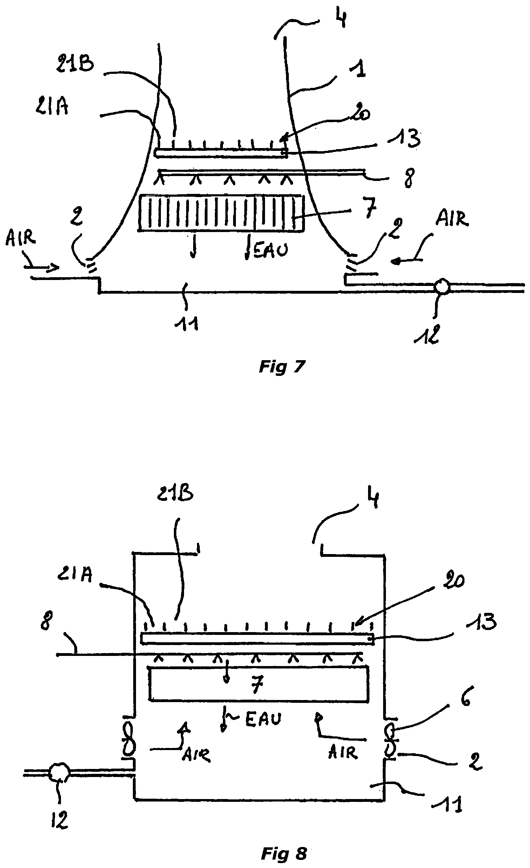

La figure 7 est une vue schématique en coupe d'une autre tour selon l'invention similaire à celle de la figure 1, mais sans ventilateur, le tirage étant du type tirage naturel.

La figure 8 est une vue schématique en coupe d'encore une autre tour selon l'invention similaire à celle de la figure 1, mais avec un ou des ventilateurs adaptés pour générer un tirage forcé (l'air est poussé dans l'enceinte).

La tour selon l'invention peut être munie d'autres moyens absorbants le bruit, par exemple sur les faces latérales de la tour.

Les éléments absorbants sont avantageusement directement fixés sur le séparateur de goutte 13, de manière à ce que la face inférieure prenne directement appui sur le séparateur de goutte, au moins pour les zones situées entre deux liens 23. Au niveau des liens 23, un support local intermédiaire est possible.

## Revendications

1. Tour de réfrigération pour refroidir un fluide aqueux au moyen d'air par contact direct, avantageusement à contre courant, dudit fluide aqueux avec l'air dans une enceinte, cette tour comprenant :une enceinte (1);
* une amenée d'air (2) dans ladite enceinte (1);
* une évacuation d'air (4) hors de ladite enceinte (1);
* un échangeur de chaleur (7) situé dans l'enceinte (1) entre l'amenée d'air (2) et l'évacuation d'air (4) assurant un contact direct entre le fluide aqueux à refroidir et de l'-air circulant dans l'échangeur (7);
* un dispositif de pulvérisation (8) du fluide aqueux à refroidir sur au moins une partie de l'échangeur (7); et
* un séparateur de goutte situé entre le dispositif de pulvérisation (8) et l'évacuation (4),
au moins un moyen (20) pour absorber au moins partiellement le bruit généré dans l'enceinte (1) formé par un élément absorbant du bruit ou une série d'éléments absorbants du bruit (21A, 21B) **caractérisée en ce que** ledit au moins un moyen comporte au moins une partie réalisée en mousse présentant une hauteur moyenne d'au moins 5cm, avantageusement de 25cm à 100cm, une épaisseur d'au moins 2cm, avantageusement de 10cm à 30cm, et une densité inférieure à 100kg/m³, avantageusement inférieure à 50kg/m³, en particulier de 15 à 30 kg/m³, l'élément absorbant ou ladite série d'éléments absorbants étant disposés sur le séparateur de goutte (13) ou au-dessus de celui-ci, éventuellement avec interposition d'un support permettant le passage d'air provenant du séparateur de goutte (13), l'élément absorbant ou ladite série d'éléments absorbants étant agencés ou adaptés pour définir un réseau de passages distincts ouverts pour l'air sortant du séparateur de goutte (13) vers l'évacuation (4), lesdits passages présentant chacun une section ouverte comprise entre 200cm² et 2000cm², avantageusement entre 400cm² et 900cm², plus particulièrement de 500cm² à 700cm². et une hauteur de 5 à 100cm, en particulier de 10 à 50 cm, par exemple de 20 à 30cm,
et **en ce que** la tour comporte un moyen limitant les mouvements relatifs dudit élément absorbant ou desdits éléments absorbants formant ledit réseau par rapport au séparateur de goutte (13) dans une direction perpendiculaire au plan de la surface supérieure du séparateur de goutte (13), avantageusement évitant sensiblement tous mouvements relatifs dudit élément absorbant ou desdits éléments absorbant formant ledit réseau de passages par rapport au séparateur de goutte (13).

2. Tour selon la revendication 1, **caractérisée en ce qu'**elle comporte des éléments absorbants présentant des moyens adaptés pour coopérer les uns avec d'autres pour former au moins partiellement un réseau d'alvéoles formant chacune un passage ouvert distinct pour de l'air sortant du séparateur de goutte (13), lesdits moyens étant adaptés pour maintenir la position relative d'éléments absorbants par rapport à d'autres.

3. Tour selon la revendication 2, **caractérisée en ce que** les éléments absorbants (21A, 21B) sont des éléments longitudinaux présentant une série d'évidements (25) adaptés pour assurer l'emboîtement d'une partie d'un premier élément absorbant (21A) dans l'évidement d'un deuxième élément absorbant (21B), les éléments absorbants (21A, 21B) étant de préférence adaptés pour former un réseau d'alvéoles ouvertes distinctes, chaque alvéole de section sensiblement triangulaire ou carrée ou rectangulaire ou parallélogramme de section ouverte comprise entre 200cm² et 2000cm², avantageusement entre 400cm² et 900cm².

4. Tour suivant l'une quelconque des revendications 2 et 3, **caractérisée en ce que** chaque alvéole ouverte distincte définit une chambre ouverte s'étendant entre une ouverture inférieure et une ouverture supérieure, chacune de section comprise entre 200 et 2000cm², lesdites ouvertures inférieure et supérieure étant distantes l'une de l'autre d'une distance de 5 à 100cm, en particulier de 10 à 50 cm.

5. Tour suivant l'une quelconque des revendications 2 à 4, **caractérisée en ce que** le réseau d'alvéoles présente une section obturée par les éléments absorbants (21A, 21B) et une section ouverte définie par les chambres ouvertes définies par les alvéoles, le rapport section ouverte / section obturée du réseau d'alvéoles ouvertes étant compris entre 2 et 5, avantageusement entre 2 et 4.

6. Tour selon l'une quelconque des revendications précédentes, **caractérisé en ce que** l'élément absorbant ou la série d'éléments absorbants est/sont réalisés en mousse à cellules de taille moyenne en nombre comprise entre 500 et 2000 µm, avantageusement entre 700 et 1200 µm, et
**en ce que** l'élément absorbant ou la série d'éléments absorbants présente/présentent une épaisseur ou largeur comprise entre 2 et 30cm, avantageusement entre 10 et 30cm.

7. Tour suivant l'une quelconque des revendications précédentes, **caractérisée en ce que** le réseau formé par l'élément absorbant ou ladite série d'éléments absorbants est placé sur le séparateur de goutte, une partie prépondérante de la face inférieure de l'élément absorbant ou de chaque élément absorbant formant ledit réseau prenant appui sur le séparateur de goutte.

8. Tour suivant l'une quelconque des revendications précédentes, **caractérisée en ce que** le réseau est fixé audit séparateur par des liens (23) en des zones où des éléments absorbants (21A, 21B) se croisent ou en des noeuds dudit réseau, le réseau n'étant avantageusement fixé audit séparateur de goutte (13) sensiblement uniquement en des zones où les éléments absorbants (21A, 21B) se croisent.

9. Tour suivant l'une quelconque des revendications précédentes, **caractérisée en ce que** le réseau formé par ledit élément absorbant ou la série d'éléments absorbants, avantageusement par la série d'éléments absorbants (21A, 21B) présente une première face tournée vers le séparateur de goutte (13) et une deuxième face opposée à ladite première face, ladite première et/ou deuxième face étant associée à un film polyuréthanne ou polyétheramide (26) d'épaisseur comprise entre 10 et 200µm, avantageusement entre 20 et 50µm, ledit film étant résistant à l'eau.

10. Tour suivant l'une quelconque des revendications précédentes, **caractérisée en ce que** l'élément absorbant ou la série d'éléments absorbants forme/forment un réseau auto-portant prenant appui sur le séparateur de goutte sans interposition d'un cadre ou d'un grillage métallique.

11. Utilisation d'une tour suivant l'une quelconque des revendications précédentes, pour refroidir de manière efficace et avec atténuation de bruit, un fluide aqueux au moyen d'air par contact direct, avantageusement à contre courant, dudit fluide aqueux avec de l'air dans l'enceinte de ladite tour de refroidissement.

12. Procédé pour réduire des problèmes de bruits d'une tour de refroidissement pour refroidir un fluide aqueux à refroidir au moyen d'air atmosphérique par contact direct, avantageusement à contre courant, dudit fluide aqueux à refroidir avec l'air atmosphérique dans une enceinte (1), cette tour comprenant :
* une enceinte (1);
* une amenée d'air (2) dans ladite enceinte (1);
* une évacuation d'air (4) hors de ladite enceinte (1);
* un échangeur de chaleur (7) situé dans l'enceinte (1) entre l'amenée d'air (2) et l'évacuation d'air (4) assurant un contact direct entre le fluide aqueux à refroidir et de l'air circulant dans l'échangeur (7);
* un dispositif de pulvérisation (8) du fluide aqueux à refroidir sur au moins une partie de l'échangeur (7); et
* un séparateur de goutte (13) situé entre le dispositif de pulvérisation et l'évacuation,
dans lequel on place sur le séparateur de goutte (13) ou au-dessus de celui-ci, éventuellement avec interposition d'un support permettant le passage d'air provenant du séparateur de goutte (13), un élément absorbant du bruit ou une série d'éléments absorbants du bruit (21A, 21B) comportant au moins une partie réalisée en mousse présentant une hauteur moyenne d'au moins 5cm, avantageusement de 25cm à 100cm, une épaisseur moyenne d'au moins 2cm, avantageusement de 10cm à 30cm, et une densité inférieure à 100kg/m³, avantageusement inférieure à 50kg/m³, en particulier de 15 à 30 kg/m³, ledit élément absorbant ou ladite série d'éléments absorbants (21A, 21B) étant agencés ou adaptés pour définir un réseau de passages distincts ouverts pour l'air sortant du séparateur de goutte vers l'évacuation, lesdits passages présentant chacun une section ouverte comprise entre 200cm² et 2000cm², avantageusement entre 400 et 900cm², et une hauteur de 5 à 100cm, en particulier de 10 à 50cm,
et dans lequel on utilise un moyen de maintien (23) pour limiter les mouvements relatifs dudit élément absorbant ou desdits éléments absorbants (21A, 21B) formant ledit réseau par rapport au séparateur de goutte (13) dans une direction perpendiculaire au plan de la surface supérieure du séparateur de goutte (13), avantageusement évitant sensiblement tous mouvements relatifs dudit élément absorbant ou desdits éléments absorbants formant ledit réseau de passages par rapport au séparateur de goutte (13).

13. Procédé selon la revendication 12, dans lequel on utilise des éléments absorbants présentant des moyens adaptés pour coopérer les uns avec d'autres pour former au moins partiellement un réseau d'alvéoles formant chacune un passage ouvert distinct pour de l'air sortant du séparateur de goutte, lesdits moyens (23) étant adaptés pour maintenir la position relative d'éléments absorbants par rapport à d'autres, lesdits éléments absorbants (21A, 21B) étant avantageusement des éléments longitudinaux présentant une série d'évidements (25) adaptés pour assurer l'emboîtement d'une partie d'un élément absorbant (21A) dans l'évidement d'un autre élément absorbant, (21B) et étant de préférence adaptés pour former un réseau d'alvéoles de section sensiblement triangulaire ou carrée ou rectangulaire ou parallélogramme de section ouverte comprise entre 200cm² et 2000cm², avantageusement entre 400cm² et 900cm².

14. Procédé selon la revendication 12 ou 13, dans lequel on utilise un élément absorbant ou des éléments absorbants au moins partiellement en mousse pour former un réseau d'alvéoles définissant chacune une chambre ouverte s'étendant entre une ouverture inférieure et une ouverture supérieure, chacune de section comprise entre 200 et 2000cm², lesdites ouvertures inférieure et supérieure étant distante l'une de l'autre de 5 à 100cm, en particulier de 10 à 50 cm, ledit élément absorbant ou une série d'éléments absorbants (21A, 21B) étant avantageusement réalisés en mousse à cellules de taille moyenne en nombre comprise entre 500 et 2000 µm, avantageusement entre 700 et 1200 µm.

15. Procédé selon l'une des revendications 12 à 14, dans lequel on utilise et place un élément absorbant ou des éléments absorbants (21A, 21B) pour former un réseau d'alvéoles ouvertes présentant une section obturée par l'élément absorbant ou les éléments absorbants (21A, 21B) et une section ouverte définie par les chambres ouvertes définies par les alvéoles, le rapport section ouverte / section obturée du réseau d'alvéoles ouvertes étant compris entre 2 et 5, avantageusement entre 2 et 3, et dans lequel on lie ou fixe avantageusement le réseau (20) audit séparateur de goutte (13) par des liens (23) en des zones du réseau où des éléments absorbants (21A, 21B) se croisent ou où l'élément absorbant forme des noeuds, l'élément absorbant ou la série d'éléments absorbants n'étant avantageusement pas reliés par des liens (23) audit séparateur de goutte (13) dans les zones du réseau où les éléments absorbants (21A, 21B) ne se croisent pas ou dans des zones du réseau autres que les noeuds.

## Patentansprüche

1. Kühlturm zum Kühlen einer wässrigen Flüssigkeit mittels Luft durch direkten Kontakt, vorteilhafterweise im Gegenstrom, der wässrigen Flüssigkeit mit Luft in einem Behälter, wobei dieser Turm aufweist: einen Behälter (1),
* eine Luftzufuhr (2) in den Behälter (1),
* einen Luftauslass (4) aus dem Behälter (1),
* einen Wärmetauscher (7), der in dem Behälter (1) zwischen der Luftzufuhr (2) und dem Luftauslass (4) angeordnet ist, der einen direkten Kontakt zwischen der zu kühlenden wässrigen Flüssigkeit und der Luft, die in dem Wärmetauscher (7) zirkuliert, gewährleistet,
* eine Sprühvorrichtung (8) der zu kühlenden wässrigen Flüssigkeit auf mindestens einem Teil des Wärmetauschers (7) und
* einen Tropfenabscheider, der zwischen der Sprühvorrichtung (8) und dem Auslass (4) angeordnet ist,
mindestens ein Mittel (20), um das Geräusch, das in dem Behälter (1) erzeugt wird, mindestens teilweise zu absorbieren, das aus einem schallabsorbierenden Element oder aus einer Reihe von schallabsorbierenden Elementen (21A, 21B) gebildet ist,
**dadurch gekennzeichnet, dass** das mindestens eine Mittel mindestens einen Teil aufweist, der aus Schaum besteht, der eine mittlere Höhe von mindestens 5 cm, vorteilhafterweise von 25 cm bis 100 cm, eine Dicke von mindestens 2 cm, vorteilhafterweise von 10 cm bis 30 cm, und eine Dichte von weniger als 100 kg/m³, vorteilhafterweise von weniger als 50 kg/m³, insbesondere von 15 bis 30 kg/m³, aufweist, wobei das absorbierende Element oder die Reihe von absorbierenden Elementen auf dem Tropfenabscheider (13) oder oder über diesem angeordnet ist oder sind, eventuell mit Zwischenlagerung von einer Stütze, die den Durchgang von Luft, die von dem Tropfenabscheider (13) kommt, ermöglicht, wobei das absorbierende Element oder die Reihe von absorbierenden Elementen angeordnet oder geeignet ist, um ein Netzwerk von gesonderten offenen Durchgängen für die Luft zu definieren, die aus dem Tropfenabscheider (13) zum Auslass (4) austritt, wobei die Durchgänge jeweils einen offenen Querschnitt zwischen 200 cm² und 2.000 cm², vorzugsweise zwischen 400 cm² und 900 cm², insbesondere von 500 cm² bis 700 cm² und eine Höhe von 5 bis 100 cm, insbesondere von 10 bis 50 cm, beispielsweise von 20 bis 30 cm, aufweisen,
und dadurch, dass der Turm ein Mittel aufweist, das die relativen Bewegungen des absorbierenden Elements oder der absorbierenden Elemente, die das Netzwerk bilden, in Bezug auf den Tropfenabscheider (13) in einer Richtung, die senkrecht zur Ebene der Oberseite des Tropfenabscheiders (13) ist, begrenzt, vorteilhafterweise indem im Wesentlichen alle Relativbewegungen des absorbierenden Elements oder der absorbierenden Elemente, die das Netzwerk von Durchgängen bilden, in Bezug auf den Tropfenabscheider (13) vermieden werden.

2. Turm nach Anspruch 1, **dadurch gekennzeichnet, dass** er absorbierende Elemente aufweist, die geeignet sind, um miteinander zusammenzuwirken, um mindestens teilweise ein Netzwerk von Zellen zu bilden, die jeweils einen gesonderten offenen Durchgang für Luft, die aus dem Tropfenabscheider (13) austritt, bilden, wobei die Mittel geeignet sind, um die Relativposition von absorbierenden Elementen in Bezug auf andere aufrecht zu erhalten.

3. Turm nach Anspruch 2, **dadurch gekennzeichnet, dass** die absorbierenden Elemente (21A, 21B) Längselemente sind, die eine Reihe von Ausnehmungen (25) aufweisen, die geeignet sind, um das Ineinanderstecken eines Teils eines ersten absorbierenden Elements (21A) in die Ausnehmung eines zweiten absorbierenden Elements (21B) zu gewährleisten, wobei die absorbierenden Elemente (21A, 21B) vorzugsweise geeignet sind, um ein Netzwerk von gesonderten offenen Zellen zu bilden, jede Zelle mit im Wesentlichen dreieckigem oder quadratischen oder rechteckigen Querschnitt oder mit Querschnitt in Form eines Parallelogramms mit offenem Querschnitt zwischen 200 cm² und 2.000 cm², vorzugsweise zwischen 400 cm² und 900 cm².

4. Turm nach einem der Ansprüche 2 und 3, **dadurch gekennzeichnet, dass** jede gesonderte offene Zelle eine offene Kammer definiert, die sich zwischen einer unteren Öffnung und einer oberen Öffnung erstreckt, jede mit einem Querschnitt zwischen 200 und 2.000 cm², wobei die untere und obere Öffnung um einen Abstand von 5 bis 100 cm, insbesondere von 10 bis 50 cm, beabstandet sind.

5. Turm nach einem der Ansprüche 2 bis 4, **dadurch gekennzeichnet, dass** das Netzwerk von Zellen einen Querschnitt, der durch die absorbierenden Elemente (21A, 21B) verschlossenen ist, und einen offenen Querschnitt aufweist, der durch die offenen Kammern definiert ist, die durch die Zellen definiert sind, wobei das Verhältnis offener Querschnitt/geschlossener Querschnitt des Netzwerks offener Zellen zwischen 2 und 5, vorteilhafterweise zwischen 2 und 4, beträgt.

6. Turm nach einem der vorhergehenden Ansprüche,
**dadurch gekennzeichnet, dass** das absorbierende Element oder die Reihe von absorbierenden Elementen aus Schaum mit Zellen mittlerer Größe in einer Anzahl zwischen 500 und 2.000 µm, vorzugsweise zwischen 700 und 1.200 µm, besteht, und
dadurch, dass das absorbierende Element oder die Reihe von absorbierenden Elementen eine Dicke oder Breite aufweist, die zwischen 2 und 30 cm, vorzugsweise zwischen 10 und 30 cm, beträgt.

7. Turm nach einem der vorhergehenden Ansprüche,
**dadurch gekennzeichnet, dass** das Netzwerk, das durch das absorbierende Element oder die Reihe von absorbierenden Elementen gebildet ist, auf dem Tropfenabscheider angeordnet ist, wobei ein überwiegender Teil der Unterseite des absorbierenden Elements oder jedes absorbierenden Elements, die das Netzwerk bilden, auf dem Tropfenabscheider aufliegt.

8. Turm nach einem der vorhergehenden Ansprüche,
**dadurch gekennzeichnet, dass** das Netzwerk an dem Abscheider durch Verbindungen (23) in Bereichen, in denen sich absorbierende Elemente (21A, 21B) kreuzen, oder in Knoten des Netzwerks befestigt ist, wobei das Netzwerk vorteilhafterweise im Wesentlichen nur in Bereichen an dem Tropfenabscheider (13) befestigt ist, in denen sich die absorbierenden Elemente (21A, 21B) kreuzen.

9. Turm nach einem der vorhergehenden Ansprüche,
**dadurch gekennzeichnet, dass** das Netzwerk, das durch das absorbierende Element oder die Reihe von absorbierenden Elementen, vorteilhafterweise durch die Reihe von absorbierenden Elementen (21A, 21B), gebildet ist, eine erste Seite, die dem Tropfenabscheider (13) zugewandt ist, und eine zweite Seite aufweist, die der ersten Seite gegenüberliegt, wobei die erste und/oder zweite Seite mit einer Polyurethan- oder Polyetheramidfolie (26) mit einer Dicke, die zwischen 10 und 200 µm, vorzugsweise zwischen 20 und 20 µm beträgt, verbunden ist, wobei die Folie wasserbeständig ist.

10. Turm nach einem der vorhergehenden Ansprüche,
**dadurch gekennzeichnet, dass** das absorbierende Element oder die Reihe von absorbierenden Elementen ein selbsttragendes Netzwerk bildet, das auf dem Tropfenabscheider aufliegt, ohne dass ein Rahmen oder ein Drahtgeflecht dazwischenliegt.

11. Verwendung eines Turms nach einem der vorhergehenden Ansprüche, um eine wässrige Flüssigkeit mittels Luft durch direkten Kontakt, vorteilhafterweise im Gegenstrom, der wässrigen Flüssigkeit mit Luft in dem Behälter des Kühlturms wirksam und mit Geräuschdämpfung zu kühlen.

12. Verfahren zum Reduzieren von Geräuschproblemen eines Kühlturms zum Kühlen einer wässrigen Flüssigkeit mittels atmosphärischer Luft durch direkten Kontakt, vorteilhafterweise im Gegenstrom, der zu kühlenden wässrigen Flüssigkeit mit atmosphärischer Luft in einem Behälter (1), wobei dieser Turm aufweist:
* einen Behälter (1),
* eine Luftzufuhr (2) in den Behälter (1),
* einen Luftauslass (4) aus dem Behälter (1),
* einen Wärmetauscher (7), der in dem Behälter (1) zwischen der Luftzufuhr (2) und dem Luftauslass (4) angeordnet ist, der einen direkten Kontakt zwischen der zu kühlenden wässrigen Flüssigkeit und der Luft, die in dem Wärmetauscher (7) zirkuliert, gewährleistet,
* eine Sprühvorrichtung (8) der zu kühlenden wässrigen Flüssigkeit (7) auf mindestens einem Teil des Wärmetauschers (7) und
* einen Tropfenabscheider (13), der zwischen der Sprühvorrichtung und dem Auslass angeordnet ist,
wobei auf dem Tropfenabscheider (13) oder über diesem, eventuell mit Zwischenlagerung von einer Stütze, die den Durchgang von Luft, die von dem Tropfenabscheider (13) kommt, ermöglicht, ein schallabsorbierendes Element oder eine Reihe von schallabsorbierenden Elementen (21A, 21B) angeordnet wird, das mindestens einen Teil aufweist, der aus Schaum besteht, der eine durchschnittliche Höhe von mindestens 5 cm, vorteilhafterweise von 25 cm bis 100 cm, eine mittlere Dicke von mindestens 2 cm, vorteilhafterweise von 10 cm bis 30 cm, und eine Dichte von weniger als 100 kg/m3, vorteilhafterweise von weniger als 50 kg/m³, insbesondere von 15 bis 30 kg/m³, aufweist, wobei das absorbierende Element oder die Reihe von absorbierenden Elementen (21A, 21B) angeordnet oder geeignet ist, um ein Netzwerk von gesonderten offenen Durchgängen für die Luft zu definieren, die aus dem Tropfenabscheider zum Auslass austritt, wobei die Durchgänge jeweils einen offenen Querschnitt zwischen 200 cm² und 2.000 cm², vorteilhafterweise zwischen 400 cm² und 900 cm², und eine Höhe von 5 bis 50 cm, insbesondere von 10 bis 50 cm, aufweisen,
und wobei ein Mittel zum Halten (23) verwendet wird, um die relativen Bewegungen des absorbierenden Elements oder der absorbierenden Elemente (21A, 21B), die das Netzwerk bilden, in Bezug auf den Tropfenabscheider (13) in einer Richtung, die senkrecht zur Ebene der Oberseite des Tropfenabscheiders (13) ist, begrenzt, vorteilhafterweise indem im Wesentlichen alle Relativbewegungen des absorbierenden Elements oder der absorbierenden Elemente, die das Netzwerk von Durchgängen bilden, in Bezug auf den Tropfenabscheider (13) vermieden werden.

13. Verfahren nach Anspruch 12, **dadurch gekennzeichnet, dass** absorbierende Elemente verwendet werden, die Mittel aufweisen, die geeignet sind, um miteinander zusammenzuwirken, um mindestens teilweise ein Netzwerk von Zellen zu bilden, die jeweils einen gesonderten offenen Durchgang für Luft, die aus dem Tropfenabscheider austritt, bilden, wobei die Mittel (23) geeignet sind, um die Relativposition von absorbierenden Elementen in Bezug auf andere aufrecht zu erhalten, wobei die absorbierenden Elemente (21A, 21B) vorteilhafterweise Längselemente sind, die eine Reihe von Ausnehmungen (25) aufweisen, die geeignet sind, um das Ineinanderstecken eines Teils eines ersten absorbierenden Elements (21A) in die Ausnehmung eines anderen absorbierenden Elements (21B) zu gewährleisten, und vorzugsweise geeignet sind, um ein Netzwerk von Zellen mit im Wesentlichen dreieckigem oder quadratischen oder rechteckigen Querschnitt oder mit Querschnitt in Form eines Parallelogramms mit offenem Querschnitt zwischen 200 cm² und 2.000 cm², vorzugsweise zwischen 400 cm² und 900 cm², zu bilden.

14. Verfahren nach Anspruch 12 oder 13, **dadurch gekennzeichnet, dass** ein absorbierendes Element oder absorbierende Elemente verwendet werden, die mindestens teilweise aus Schaum sind, um ein Netzwerk an Zellen zu bilden, die jeweils eine offene Kammer definieren, die sich zwischen einer unteren Öffnung und einer oberen Öffnung erstreckt, jede mit einem Querschnitt zwischen 200 und 2.000 cm², wobei die untere und obere Öffnung um einen Abstand von 5 bis 100 cm, insbesondere von 10 bis 50 cm, voneinander beabstandet sind, wobei das absorbierende Element oder die Reihe von absorbierenden Elementen (21A, 21B) vorteilhafterweise aus Schaum mit Zellen mittlerer Größe in einer Anzahl zwischen 500 und 2.000 µm, vorteilhafterweise zwischen 700 und 1.200 µm, besteht.

15. Verfahren nach einem der Ansprüche 12 bis 14, wobei ein absorbierendes Element oder absorbierende Elemente (21A, 21B) verwendet werden, um ein Netzwerk offener Zellen zu bilden, die einen Querschnitt, der durch das oder die absorbierenden Elemente (21A, 21B) verschlossenen ist, und einen offenen Querschnitt aufweisen, der durch die offenen Kammern definiert ist, die durch die Zellen definiert sind, wobei das Verhältnis offener Querschnitt/geschlossener Querschnitt des Netzwerks offener Zellen zwischen 2 und 5, vorteilhafterweise zwischen 2 und 3 beträgt, und wobei das Netzwerk (20) vorteilhafterweise mit dem Tropfenabscheider (13) durch Verbindungen (23) in Bereichen des Netzwerks, in denen sich absorbierende Elemente (21A, 21B) kreuzen oder in denen das absorbierende Element Knoten bildet, verbunden oder daran befestigt wird, wobei das absorbierende Element oder die Reihe absorbierender Elemente vorteilhafterweise nicht durch Verbindungen (23) mit dem Tropfenabscheider (13) in den Bereichen des Netzwerks, in denen sich die absorbierenden Elemente (21A, 21B) nicht kreuzen, oder in anderen Bereichen des Netzwerks als den Knoten verbunden ist.

## Claims

1. Refrigeration tower for cooling an aqueous fluid by means of air by direct contact, advantageously in counterflow, of said aqueous fluid with air in an enclosure, this tower comprising:
* an enclosure (1);
* an air supply (2) in said enclosure (1);
* an air outlet (4) for said enclosure (1);
* a heat exchanger (7) located in the enclosure (1) between the air supply (2) and the air outlet (4) ensuring a direct contact between the aqueous fluid to be cooled and air flowing in the exchanger (7);
* a spraying device (8) of the aqueous fluid to be cooled on at least a portion of the exchanger (7); and
* a droplet separator located between the spraying device (8) and the outlet (4),
* at least one means (20) for at least partially absorbing the noise generated in the enclosure (1) formed by a noise absorbing element or a series of noise absorbing elements (21A, 21B),
**characterized in that** the said at least one means comprises at least one part made of foam having an average height of at least 5cm, preferably from 25cm to 100cm, a thickness of at least 2cm, preferably from 10cm to 30cm, and a density of less than 100 kg/m³, advantageously less than 50 kg/m³, in particular from 15 to 30 kg/m³, the absorbing element or said series of absorbing elements being arranged on the droplet separator (13) or above it, optionally with the interposition of a support allowing the passage of air coming from the droplet separator (13), the absorbing element or said series of absorbing elements being arranged or adapted to define a network of distinct open passages for the air exiting the droplet separator (13) towards the outlet (4), said passages each having an open section between 200 cm² and 2000 cm², preferably between 400 cm² and 900 cm², more particularly from 500 cm² to 700 cm², and a height of 5 to 100 cm, in particular of 10 to 50 cm, for example 20 to 30 cm, and **in that** the tower comprises a means limiting the relative movements of said absorbing element or of said absorbing elements forming said network with respect to the separator dropper (13) in a direction perpendicular to the plane of the upper surface of the droplet separator (13), preferably substantially avoiding any relative movements of said absorbing element or said absorbing elements forming said network of passages with respect to the droplet separator (13).

2. Tower according to claim 1, **characterized in that** it comprises absorbing elements having means adapted to cooperate with each other to at least partially form a network of cells each forming a separate open passage for air outgoing from the droplet separator (13), said means being adapted to maintain the relative position of absorbing elements relative to others.

3. Tower according to claim 2, **characterized in that** the absorbing elements (21A, 21B) are longitudinal elements having a series of recesses (25) adapted to interlock a portion of a first absorbing element (21A) in the recess of a second absorbing element (21B), the absorbing elements (21A, 21B) being preferably adapted to form a network of distinct open cells, each cell of substantially triangular or square or rectangular or parallelogram section having an open section between 200 cm² and 2000 cm², preferably between 400 cm² and 900 cm².

4. Tower according to any one of claims 2 and 3, **characterized in that** each distinct open cell defines an open chamber extending between a lower opening and an upper opening, each with a section between 200 and 2000 cm², said lower and upper openings being spaced from each other by a distance of 5 to 100 cm, in particular from 10 to 50 cm.

5. Tower according to any one of claims 2 to 4, **characterized in that** the cell network has a section closed by the absorbing elements (21A, 21B) and an open section defined by the open chambers defined by the cells, the ratio open section / closed section of the network of open cells being comprised between 2 and 5, preferably between 2 and 4.

6. Tower according to any one of the preceding claims, **characterized in that** the absorbing element or the series of absorbing elements is / are made of foam of cells of average size in number comprised between 500 and 2000 µm, advantageously between 700 and 1200 µm, and **in that** the absorbing element or the series of absorbing elements has / have a thickness or width of between 2 and 30 cm, advantageously between 10 and 30 cm.

7. Tower according to any one of the preceding claims, **characterized in that** the network formed by the absorbing element or said series of absorbing elements is placed on the droplet separator, a predominant part of the bottom face of the absorbing element or each absorbing element forming said network bearing on the droplet separator.

8. Tower according to any one of the preceding claims, **characterized in that** the network is attached to said separator by links (23) in areas where absorbing elements (21A, 21B) intersect or nodes of said network, the network being advantageously attached to said droplet separator (13) substantially only in areas where the absorbing elements (21A, 21B) intersect.

9. Tower according to any one of the preceding claims, **characterized in that** the network formed by said absorbing element or the series of absorbing elements, advantageously by the series of absorbing elements (21A, 21B) has a first face turned towards the separator droplet (13) and a second face opposite to said first face, said first and / or second face being associated with a polyurethane or polyetheramide film (26) with a thickness of between 10 and 200 µm, advantageously between 20 and 50 µm, said film being water resistant.

10. Tower according to any one of the preceding claims, **characterized in that** the absorbing element or the series of absorbing elements forms / form a self-supporting network resting on the droplet separator without the interposition of a frame or a wire mesh.

11. Use of a tower according to any one of the preceding claims for cooling efficiently and with noise attenuation, an aqueous fluid by means of air by direct contact, advantageously in counterflow, of said aqueous fluid with air in the enclosure of said cooling tower.

12. A method for reducing noise problems of a cooling tower for cooling an aqueous fluid to be cooled by atmospheric air by direct contact, advantageously in counterflow, of said aqueous fluid to be cooled with atmospheric air in an enclosure (1), this tower comprising:
* an enclosure (1);
* an air supply (2) in said enclosure (1); an air outlet (4) from said enclosure (1);
* a heat exchanger (7) located in the enclosure (1) between the air supply (2) and the air outlet (4) ensuring a direct contact between the aqueous fluid to be cooled and the air circulating in the exchanger (7);
* a spraying device (8) of the aqueous fluid to be cooled on at least a portion of the exchanger (7); and
* a droplet separator (13) located between the spray device and the discharge,
in which the droplet separator (13) is placed or above it, optionally with interposition of a support allowing the passage of air from the droplet separator (13), a sound absorbing element or a series of sound absorbing elements (21A, 21B) having at least one foam portion having an average height of at least 5cm, advantageously from 25 cm to 100 cm, an average thickness of at least 2 cm, advantageously from 10 cm to 30 cm, and a density of less than 100 kg/m , advantageously less than 50 kg/m³, in particular from 15 to 30 kg/m³, said absorbing element or said series of absorbing elements (21A, 21B) being arranged or adapted to define a network of distinct open passages for air exiting from the droplet separator towards the outlet, said passages presenting each an open section comprised between 200 cm² and 2000 cm², advantageously between 400 and 900 cm², and a height of 5 to 100 cm, in particular from 10 to 50 cm,
and in which a holding means (23) is used to limit the relative movements of said absorbing element or said absorbing elements (21A, 21B) forming said network with respect to the droplet separator (13) in a direction perpendicular to the plane of the upper surface of the droplet separator (13), advantageously substantially avoiding any movements relative to said absorbing element or said absorbing elements forming said network of passages with respect to the droplet separator (13).

13. A method according to claim 12, wherein absorbing elements having means adapted to cooperate with each other are used to at least partially form a network of cells, each forming a separate open passage for air exiting the separator drop, said means (23) being adapted to maintain the relative position of absorbing elements relative to others, said absorbing elements (21A, 21B) being advantageously longitudinal elements having a series of recesses (25) adapted to ensure interlocking a portion of an absorbing element (21A) in the recess of another absorbing element (21B) and preferably being adapted to form a network of substantially triangular or square or rectangular or parallelogram section with open section between 200 cm² and 2000 cm², preferably between 400 cm² and 900 cm².

14. A method according to claim 12 or 13, wherein an absorbing element or absorbing elements at least partially in foam is/are used to form a network of cells each defining an open chamber extending between a lower opening and an upper opening, each of section between 200 and 2000 cm², said lower and upper openings being separated from each other by 5 to 100cm, in particular from 10 to 50cm, said absorbing element or a series of absorbing elements (21A, 21B) being advantageously made of foam of cells with an average size in number comprised between 500 and 2000 µm, advantageously between 700 and 1200 µm.

15. Method according to one of claims 12 to 14, in which an absorbing element or absorbing elements (21A, 21B) are used and placed to form an open-cell network having a section closed by the absorbing element or the absorbing elements (21A, 21B) and an open section defined by the open chambers defined by the cells, the ratio open section / closed section of the network of open cells being comprised between 2 and 5, preferably between 2 and 3, and in which the said network (20) is advantageously bound or attached to the said droplet separator (13) by links (23) in areas of the network where absorbing elements (21A, 21B) intersect or where the absorbing element forms nodes, the element absorbing or the series of absorbing elements being advantageously not connected by links (23) to said droplet separator (13) in the zones of the network where the absorbing elements (21A, 21B) do not intersect or in zones of the network other than nodes.
